(19) Europäisches Patentamt
European Patent Office
Office européen des brevets

(11) **EP 3 562 741 B1**

(12) **FASCICULE DE BREVET EUROPEEN**

(45) Date de publication et mention de la délivrance du brevet:
**24.03.2021 Bulletin 2021/12**

(51) Int Cl.:
*B64D 3/02* *(2006.01)*          *F16H 25/20* *(2006.01)*
*G01B 5/16* *(2006.01)*          *B63B 21/66* *(2006.01)*
*B63B 27/36* *(2006.01)*          *F16H 1/06* *(2006.01)*
*B64D 1/22* *(2006.01)*          *B64D 7/00* *(2006.01)*
*F16B 2/08* *(2006.01)*          *F16D 49/10* *(2006.01)*
*G05G 5/04* *(2006.01)*          *G05G 15/04* *(2006.01)*

(21) Numéro de dépôt: **17829663.8**

(22) Date de dépôt: **27.12.2017**

(86) Numéro de dépôt international:
**PCT/EP2017/084610**

(87) Numéro de publication internationale:
**WO 2018/122239 (05.07.2018 Gazette 2018/27)**

(54) **DISPOSITIF D'ENTRAINEMENT**

ANTRIEBSVORRICHTUNG

DRIVING DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.12.2016 FR 1601874**

(43) Date de publication de la demande:
**06.11.2019 Bulletin 2019/45**

(73) Titulaire: **Thales**
**92400 Courbevoie (FR)**

(72) Inventeurs:
• CADALEN, François
**06903 Sophia Antipolis Cedex (FR)**
• FRAISSE, Yohann
**06903 Sophia Antipolis Cedex (FR)**
• WARNAN, François
**06903 Sophia Antipolis Cedex (FR)**

(74) Mandataire: **Marks & Clerk France**
**Immeuble "Visium"**
**22, avenue Aristide Briand**
**94117 Arcueil Cedex (FR)**

(56) Documents cités:
| EP-A1- 1 195 541 | EP-A2- 0 739 724 |
| WO-A1-2011/096913 | CN-A- 1 181 473 |
| FR-A- 318 545 | US-A- 4 241 813 |
| US-A1- 2010 038 983 | US-A1- 2012 227 524 |

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention se rapporte aux dispositifs d'entraînement à système vis-écrou. Dans ce type de mécanismes, la rotation d'une tige filetée provoque la translation d'un écrou relié à la tige filetée par une liaison hélicoïdale, le long de l'axe longitudinal de la tige. Un exemple de mécanisme de ce type est divulgué dans la demande de brevet US2010 1038983 A1.

De tels mécanismes sont notamment mis en œuvre dans des dispositifs de détection pour la lutte héliportée contre les menaces sous-marines dans lesquels une antenne pour détecter des menaces sous-marines est suspendue à une plateforme aérienne comme par exemple un aéronef qui permet d'immerger l'antenne. L'antenne comprend les émetteurs et les récepteurs proprement dits et éventuellement des équipements électroniques associés aux émetteurs et récepteurs. Elle peut comprendre également des capteurs d'environnement. De plus, à bord de la plateforme aérienne, le dispositif de détection comprend des équipements nécessaires à la génération des signaux acoustiques et au traitement des données acoustiques reçues.

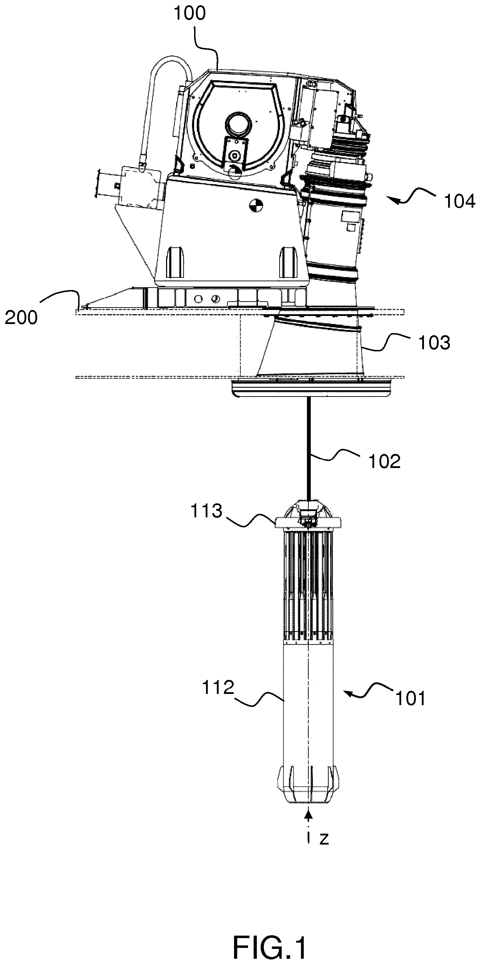

Un exemple de dispositif de détection est représenté sur la figure 1. Il comprend un treuil 100 destiné à être installé dans une plateforme aérienne. Le dispositif de lutte aéroportée comprend une antenne 101 suspendue au bout d'un câble électro-tracteur 102 du treuil 100, éventuellement doté d'un entonnoir 103 (ou « funnel » en terminologie anglo-saxonne) comme c'est le cas sur la figure 1. Le treuil 100 est destiné à effectuer le déploiement et la récupération de l'antenne 101. Sur la figure 1 le treuil 100 est fixé sur un plancher 200 d'une plateforme aérienne. Le câble électro-tracteur 102 permet de véhiculer des signaux ainsi que l'énergie électrique nécessaire à l'émission acoustique et/ou au fonctionnement des récepteurs. En déroulant le câble 102 à l'aide du treuil 100, l'antenne 101 est descendue, au travers de l'éventuel entonnoir 103 dans l'eau. Enrouler le câble 102 permet de remonter l'antenne 101 dans la plateforme aérienne au sein de l'éventuel entonnoir 103 comme représenté sur la figure 1.

L'antenne 101 présente une forme de dôme allongé essentiellement cylindrique. Elle comprend un corps allongé 112 selon l'axe z et présentant une circonférence extérieure de section sensiblement circulaire dans un plan perpendiculaire à l'axe longitudinal z de l'antenne 101. Le corps allongé 112 est entouré d'une structure de protection 113 (ou « bumper en terminologie anglo-saxonne ») présentant une circonférence extérieure de section sensiblement circulaire dans un plan perpendiculaire à l'axe longitudinal z de l'antenne 101. La circonférence extérieure de la structure de protection 113 et la circonférence extérieure du corps allongé 112 sont sensiblement concentriques. Lorsque l'antenne 101 est suspendue par son propre poids au câble 102, ce dernier s'étend également selon l'axe longitudinal de l'antenne.

Maintenir l'antenne 101 à poste dans la plateforme aérienne uniquement par le câble 102 ne permet pas d'obtenir un niveau de sécurité suffisant lorsque la plateforme aérienne est en transit notamment au-dessus de zones habitées. Le câble 102 peut se casser, il peut être coupé accidentellement par la cisaille pyrotechnique de sécurité, le frein du treuil 100 peut lâcher et libérer accidentellement le câble. La perte de l'antenne 101 signifie une perte financière importante, mais surtout, sa masse importante pourrait tomber en mer ou au sol en causant de graves dommages matériels ou humains.

La position de l'antenne 101 par rapport au treuil 100 doit être verrouillée lorsqu'elle est à poste à bord de la plateforme aérienne. Le dispositif de détection comprend alors avantageusement un dispositif de cerclage 104. Ce dispositif de cerclage 104 permet de verrouiller la position de l'antenne 101 par rapport au treuil 100 afin d'empêcher une chute accidentelle de l'antenne et ses conséquences.

Les dispositifs de cerclage connus comprennent une bande de serrage formant une boucle destinée à cercler ou ceinturer l'antenne 101 et un dispositif d'entraînement de mouvement du type système vis-écrou permettant de réduire la taille de la boucle, lors d'une étape dite de serrage, ou augmenter la taille de la boucle, lors d'une étape dite de desserrage, de sorte à enserrer l'antenne 101 ou respectivement la desserrer pour la libérer. Chaque extrémité de la bande de serrage est en prise avec un filetage de la tige filetée en translation le long de la tige filetée. Les écrous sont en prises avec des filetages réalisés en sens inverse de sorte que le serrage et le desserrage sont réalisés par un déplacement des extrémités de la bande de serrage en sens inverse le long de l'axe longitudinal d'une tige filetée. L'entraînement de la tige filetée en rotation peut être réalisé par un moteur couplé à la tige filetée ou par un opérateur via une molette solidaire de la tige filetée.

Il convient d'empêcher la taille de la boucle de dépasser une taille maximale ou d'aller en dessous d'une certaine taille minimale.

Afin de bloquer la course des écrous, la demanderesse a envisagé dans le cadre de la présente invention d'installer des butées, chaque butée étant installée sur le trajet d'un des écrous le long de l'axe de la tige filetée dans un sens (serrage ou desserrage). L'écrou mobile en translation par rapport à une butée le long de l'axe de la tige filetée, se rapproche de la butée lors de l'opération de desserrage pour venir en appui contre elle ce qui va bloquer le mouvement de translation de l'écrou par rapport à la butée et ainsi stopper l'élargissement ou la réduction de taille de la boucle formée par la bande de serrage.

Toutefois, ce type de solution peut conduire à un coincement du cerclage. En effet, lorsque l'écrou vient en appui sur la butée, un serrage s'opère dans le filetage entre la tige filetée et l'écrou. Un couple important est alors nécessaire pour desserrer l'écrou de la tige filetée afin de libérer le contact entre l'écrou et sa butée. Ce couple peut alors s'avérer excessif si le serrage de l'écrou contre la butée est trop important. Par exemple, un opérateur peut être capable d'entraîner la tige filetée en rotation jusqu'à ce qu'un écrou vienne en appui, dans un sens, contre une butée mais le couple à appliquer sur la tige filetée pour assurer un retour en arrière peut s'avérer trop important pour le moteur ou un autre opérateur. De plus, un grippage peut toujours intervenir entre la vis et l'écrou, ce qui tend encore à augmenter le couple nécessaire au desserrage.

Un but de l'invention est de proposer un dispositif d'entraînement comprenant un système du type vis-écrou qui permette de bloquer la course de l'écrou par rapport à la tige filetée dans un sens sans conduire à une situation de coincement de l'écrou par rapport à la tige filetée.

A cet effet, l'invention a pour objet, un dispositif d'entraînement comprenant :

- un système vis-écrou comprenant une tige filetée et un premier écrou lié à la tige filetée au moyen d'une liaison hélicoïdale,
- un engrenage, permettant de transmettre un mouvement de rotation à la tige filetée, l'engrenage comprenant une première roue dentée et une deuxième roue dentée en prise avec la première roue dentée,
- un ensemble de butées comprenant une première butée liée à la première roue en rotation autour d'un axe de rotation de la première roue et une deuxième butée liée à la deuxième roue dentée en rotation autour d'un axe de rotation de la deuxième roue, la première butée et la deuxième butées étant configurées et agencées pour venir en appui l'une sur l'autre de sorte à limiter une course angulaire de la tige filetée à une première position angulaire dans un premier sens.

Dans un mode de réalisation, la première butée et la deuxième butée sont configurées et agencées pour venir en appui l'une sur l'autre de sorte à limiter la course angulaire de la tige filetée à une deuxième position angulaire dans un deuxième sens inverse du premier sens.

Dans un autre mode de réalisation, l'ensemble de butées comprend une troisième butée liée à la première roue en rotation autour de l'axe de rotation de la première roue ou liée à la deuxième roue dentée en rotation autour de l'axe de rotation de la deuxième roue et configurée et agencée de façon à venir en appui sur la deuxième butée, ou respectivement sur la première butée, pour limiter la course angulaire de la tige filetée à une deuxième position angulaire dans un deuxième sens inverse du premier sens.

Dans un autre mode de réalisation, l'ensemble de butées comprend une première butée supplémentaire liée à la deuxième roue dentée en rotation autour de l'axe de rotation de la deuxième roue et une deuxième butée supplémentaire liée à la première roue en rotation autour de l'axe de rotation de la première roue, la première butée supplémentaire et la deuxième butée supplémentaire étant configurées et agencées pour venir en appui l'une sur l'autre de sorte à limiter une course angulaire de la tige filetée à une deuxième position angulaire dans le deuxième sens inverse du premier sens.

Le dispositif comprend avantageusement au moins une des caractéristiques ci-dessous prises seules ou en combinaison :

- la première roue dentée présente un premier nombre de dents et la deuxième roue dentée présente un deuxième nombre de dents différent du premier nombre de dents,
- le premier nombre de dents et le deuxième nombre de dents sont premiers entre eux,
- au moins une butée de l'ensemble de butées est susceptible d'occuper une pluralité de positions angulaires fixes prédéterminées, par rapport à la roue à laquelle elle est liée en rotation, autour de l'axe de rotation de la roue,
- au moins une butée est montée de manière amovible sur la première roue ou sur la deuxième roue à une position angulaire prise parmi une pluralité de positions angulaires,
- il comprend un moteur couplé à la tige filetée et permettant d'entraîner la tige filetée en rotation autour de l'axe longitudinal,
- la tige filetée est couplée au moteur par l'intermédiaire d'un limiteur de couple,
- la tige est couplée au moteur par l'intermédiaire d'un limiteur de couple et d'une roue libre configurés pour permettre la limitation d'un couple de rotation de la tige filetée selon son axe longitudinal dans un sens de rotation uniquement,
- il comprend un organe de commande et au moins un capteur permettant de détecter une première position angulaire maximale opérationnelle de la tige filetée dans le premier sens précédent la première position angulaire dans le premier sens, l'organe de commande recevant des mesures issues du premier capteur de position et étant configuré pour commander le moteur à partir des mesures du capteur pour arrêter le moteur lorsque la première position angulaire limite est atteinte,
- il comprend une molette solidaire d'une roue dentée de l'engrenage permettant à un opérateur de faire tourner ladite roue dentée autour d'un axe de rotation de ladite roue dentée.

L'invention se rapporte également à un dispositif de cerclage permettant de ceinturer un objet comprenant une bande de serrage comprenant une première extrémité et une deuxième extrémité et formant une boucle destinée à entourer l'objet, le dispositif de cerclage comprenant un dispositif d'entraînement selon l'une quelconque des revendications précédentes, le dispositif d'entraînement permettant de déplacer les deux extrémités l'une par rapport à l'autre pour agrandir ou réduire la taille de la boucle, la première extrémité du cerclage étant solidaire du premier écrou en translation selon l'axe de la tige filetée.

Avantageusement, le premier écrou est en prise avec un premier filetage de la tige filetée, le système vis-écrou comprenant un deuxième écrou en prise avec un deuxième filetage de la tige filetée réalisé en sens inverse du premier filetage, la deuxième extrémité de la bande de serrage étant solidaire du deuxième écrou en translation selon l'axe de la tige filetée.

L'invention se rapporte également à un dispositif de maintien permettant de serrer un objet creux, ledit dispositif comprenant une première semelle et une deuxième semelle aptes à venir en appui sur un objet creux, à l'intérieur de l'objet, le dispositif de maintien comprenant un dispositif d'entraînement selon l'invention, configuré pour déplacer les deux semelles l'une par rapport à l'autre de sorte à les écarter l'une de l'autre pour venir serrer l'objet ou les rapprocher pour libérer l'objet, la première semelle étant solidaire du premier écrou en translation selon l'axe de la tige filetée, le système vis-écrou comprenant un deuxième écrou en prise avec un deuxième filetage réalisé en sens inverse du premier filetage, la deuxième semelle étant solidaire du deuxième écrou en translation selon l'axe de la tige filetée.

L'invention sera mieux comprise à l'étude de quelques modes de réalisation décrits à titre d'exemples nullement limitatifs, et illustrés par des dessins annexés sur lesquels :

- la figure 1 déjà décrite représente schématiquement un dispositif de détection,
- la figure 2 représente schématiquement un dispositif de cerclage selon l'invention comprenant un dispositif d'entraînement selon l'invention,
- les figures 3a à 3c représentent un engrenage d'un dispositif d'entraînement selon un premier mode de réalisation dans une configuration de blocage dans un premier sens (figure 3a en perspective et 3b en vue de face et dans une configuration de blocage dans un deuxième sens inverse (figure 3c en vue de face),
- les figures 4a et 4b représentent schématiquement, en vue de face, un engrenage d'un dispositif d'entraînement selon un deuxième mode de réalisation dans une configuration de blocage dans un premier sens (figure 4a) et dans une configuration de blocage dans un deuxième sens inverse (figure 4b),
- les figures 5a et 5b représentent schématiquement, en vue de face, un engrenage d'un dispositif d'entraînement selon un troisième mode de réalisation dans une configuration de blocage dans un premier sens (figure 5a) et dans une configuration de blocage dans un deuxième sens inverse (figure 5b),
- la figure 6 représente schéma cinématique simplifié du dispositif d'entraînement selon l'invention,
- la figure 7 représente une vue partielle d'un dispositif de maintien selon l'invention.

D'une figure à l'autre les mêmes éléments sont désignés par les mêmes références numériques.

L'invention concerne un dispositif d'entraînement à système vis-écrou pouvant être utilisé dans un dispositif de cerclage 4 destiné à être intégré dans un dispositif de lutte aéroportée ou dispositif de détection tel que représenté sur la figure 1. L'invention concerne aussi le dispositif de cerclage 4 et le dispositif de détection tel que représenté sur la figure 1 comprenant le dispositif de cerclage 4 selon l'invention. Le dispositif de cerclage 4 peut de manière plus générale être utilisé pour enserrer tout type d'objet, de préférence à section circulaire mais pouvant être différente.

Le dispositif d'entraînement permet d'entraîner en translation au moins un écrou par rapport à la tige filetée le long de l'axe longitudinal de la tige filetée.

Le dispositif d'entraînement peut être utilisé pour des dispositifs autres que les dispositifs de cerclage qui nécessitent par exemple une transformation d'un mouvement de rotation en un mouvement de translation. A titre d'exemple, le dispositif d'entraînement peut être mis en œuvre dans une machine outil où un plateau se déplace en translation. La mise en œuvre de l'invention est utile pour limiter le déplacement du plateau.

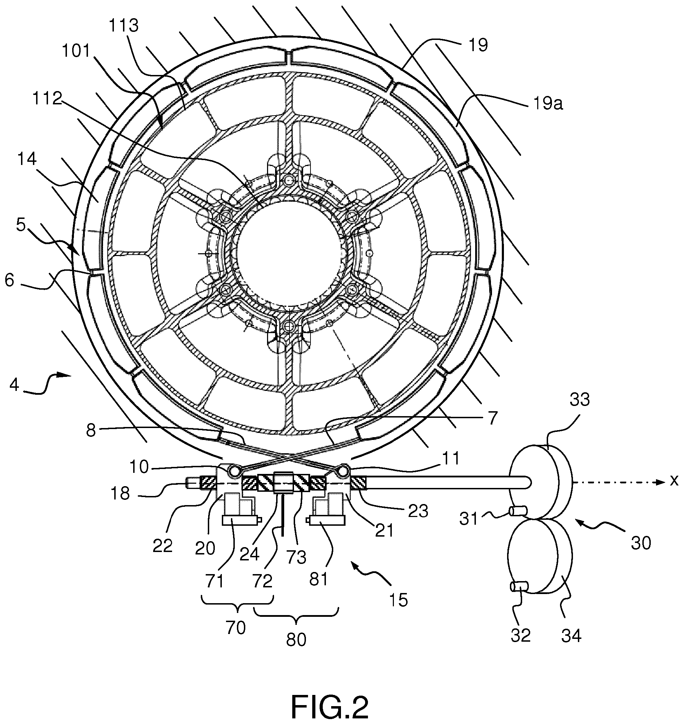

Comme visible sur la figure 2, le dispositif de cerclage 4 comprend un cerclage 5 adapté pour ceinturer un objet, par exemple une antenne 101 et plus précisément sa structure de protection 113. Le dispositif de cerclage permet d'enserrer ou de libérer l'objet, ici l'antenne 101. Le cerclage 5 comprend une bande de serrage 6 formant une boucle destinée à ceinturer l'objet. La bande de serrage 6 comprend deux extrémités longitudinales 10 et 11.

Le dispositif de cerclage 4 comprend également un dispositif de serrage/desserrage 15 permettant de déplacer les extrémités longitudinales 10 et 11 de la bande de serrage 6 l'une par rapport à l'autre pour réduire la taille de la boucle de sorte à pouvoir venir enserrer un objet, par exemple l'antenne 101, lors d'une étape dite de serrage, ou augmenter la taille de la boucle de sorte à pouvoir desserrer ou libérer un objet initialement enserré par le cerclage 5, lors d'une étape dite de desserrage. La variation de la taille de la boucle est une variation de la longueur du périmètre de la boucle, c'est-à-dire du diamètre de la boucle. Le raccourcissement du périmètre de la boucle qui se produit lors du serrage engendre une pression sur l'objet à enserrer 101 et crée un assemblage par serrage entre le cerclage 5 et l'objet 101. Pour maintenir le serrage de l'objet 101, le dispositif de serrage/desserrage 15 maintient des efforts de traction sur les extrémités libres du cerclage 5. Un bâti 19 délimite un logement 19a recevant le cerclage 5. Le logement présente une section circulaire dans un plan perpendiculaire à l'axe z (plan de la figure 2).

Le dispositif de serrage/desserrage 15 est un dispositif d'entraînement selon l'invention.

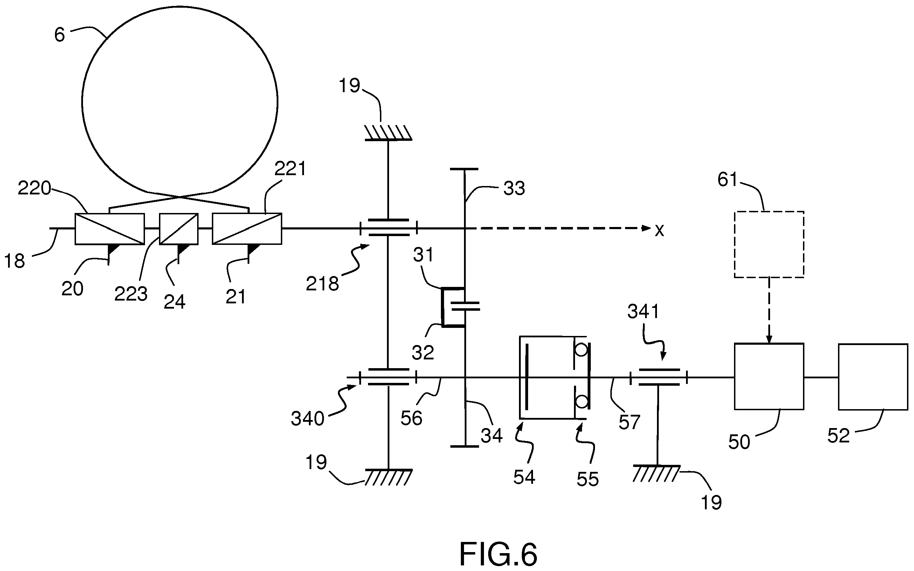

Le dispositif de serrage/desserrage 15 comprend un système vis-écrou 17 comprenant une tige filetée 18 et au moins un écrou 20. La tige filetée 18 est liée à un bâti 19 par une liaison pivot 218 visible sur la figure 6 qui sera décrite ultérieurement, permettant à la tige filetée de tourner par rapport au bâti 19 autour de l'axe longitudinal x de la tige filetée 18.

Le système vis-écrou 17 comprend un premier écrou 20 en liaison hélicoïdale, avec la tige filetée 18 et lié au bâti 19 par une liaison empêchant l'écrou de tourner autour de l'axe x. Ainsi l'écrou 20 se déplace en translation par rapport bâti 19 selon l'axe x. Le système vis-écrou 17 comprend également un deuxième écrou 21 en liaison hélicoïdale avec la tige filetée 18 et lié au bâti 19 par une liaison empêchant l'écrou de tourner autour de l'axe x. Ainsi l'écrou 21 se déplace en translation par rapport bâti 19 selon l'axe x. Comme visible sur la figure 2, le premier écrou 20 est en prise avec un premier filetage 22 de la tige filetée 18 et le deuxième écrou 21 est en prise avec un deuxième filetage 23 de la tige filetée 18. Le premier filetage 22 et le deuxième filetage 23 sont réalisés en sens inverses et peuvent présenter le même pas. Des pas différents sont également possibles. La première extrémité 10 de la bande de serrage 6 est solidaire de l'écrou 20 en translation selon l'axe x et l'extrémité 11 est solidaire de l'écrou 21 en translation selon l'axe x. Par conséquent, le système vis-écrou permet de déplacer les deux extrémités de la bande de serrage 10 et 11 en sens inverse et à la même vitesse, si les pas sont identiques, par rapport à la tige filetée 18 et au bâti 19, parallèlement à l'axe de la tige filetée 18, lors des opérations de serrage (lorsque la tige tourne dans un sens autour de l'axe x) et de desserrage (lorsque la tige tourne en sens inverse).

L'extrémité 10 ou 11 peut être solidaire de l'écrou 20 ou 21 (fixée sur l'écrou ou monobloc avec l'écrou) ou en liaison pivot sur l'écrou 20 ou 21 autour d'un axe sensiblement perpendiculaire à l'axe x et sensiblement perpendiculaire au plan de la bande de serrage 6 (plan de la boucle).

Sur la réalisation des figures, le système vis-écrou 17 comprend deux écrous 20 et 21 liés chacun à une extrémité 10 et respectivement 11. En variante, le système vis-écrou comprend un seul écrou en liaison hélicoïdale avec la tige filetée 18 et solidaire d'une des extrémités 10 ou 11 en translation par rapport au bâti selon l'axe x. L'autre extrémité est par exemple fixée au bâti 19.

Le dispositif d'entraînement 15 comprend un engrenage 30 permettant de transmettre un mouvement de rotation à la tige filetée 18. L'engrenage 30 comprend une première roue dentée 33 et une deuxième roue dentée 34 en prise avec la première roue dentée 33. Ces roues dentées sont contiguës. La roue 33 est couplée à la tige filetée 18 pour permettre la transmission d'un mouvement de rotation de la roue 34 autour d'un axe de rotation p de la roue 34, via la roue dentée 33, à la tige filetée 18. La roue 33 est la roue menée et la roue 34 est la roue menante. La tige filetée 18 tourne alors autour de son axe longitudinal x. Les deux roues dentées 33 et 34 tournent en sens inverse autour de leurs axes de rotation respectifs.

Sur la réalisation de la figure 2, l'engrenage 30 comprend seulement deux roues dentées 33 et 34 et leurs axes de rotation sont parallèles à l'axe de rotation x de la tige filetée 18. En variante, l'engrenage 30 comprend plus de deux roues dentées et les axes de rotation des roues ne sont pas forcément parallèles à l'axe longitudinal de la tige filetée 18.

Selon l'invention, le dispositif d'entraînement 15 comprend un limiteur de course permettant de limiter une course angulaire de la tige filetée 18 autour de l'axe x. Par voie de conséquence le limiteur de course permet de limiter la course des écrous le long de l'axe x. Le limiteur de course comprend un ensemble de butées comprenant une première butée 31 et une deuxième butée 32 agencées pour venir en appui l'une sur l'autre de sorte à limiter la course angulaire de la tige filetée 18 dans un premier sens de rotation autour de l'axe x.

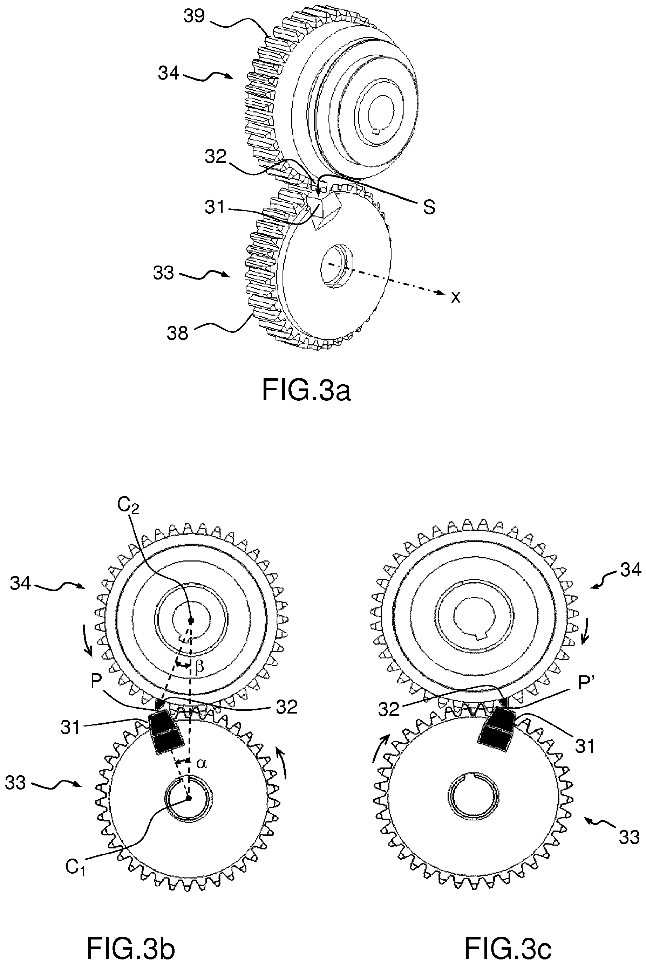

La butée 31 est liée à la première roue dentée 33 en rotation autour de l'axe de rotation de la roue 33. Autrement dit, la butée 31 est entraînée en rotation, par la roue 33, autour de l'axe de rotation de la roue 33. La deuxième butée 32 est liée à la deuxième roue dentée 34 en rotation autour de l'axe de rotation de la roue 34. Les deux roues 33, 34 tournant en sens inverse, la position des butées 31 et 32 l'une par rapport à l'autre évolue lors de la rotation de la tige filetée 18 autour de son axe longitudinal x jusqu'à atteindre une position relative dans laquelle elles viennent en appui l'une sur l'autre, comme représenté sur les figures 3a et 3b et ainsi bloquent la rotation des deux roues 33 et 34 l'une par rapport à l'autre. Cela empêche la poursuite de la rotation de la tige filetée 18 dans le premier sens de rotation. La tige 18 est bloquée dans une première position angulaire autour de l'axe x. Le mouvement relatif des deux extrémités 10 et 11 et l'élargissement ou la réduction de la taille de la boucle formée par le cerclage 5 sont alors bloqués. En résumé, la solution apportée est d'équiper le système vis-écrou 17 de deux butées franches, solides, périodiques antagonistes qui vont se trouver en confrontation après une certaine course angulaire (certain nombre de tours) de la tige filetée autour de l'axe x dans un sens de rotation. Cette solution présente l'avantage d'éviter les coincements du mécanisme de transformation de mouvement et donc du cerclage. En effet, avec ce type de butées, après blocage de rotation de la tige filetée dans le premier sens de rotation, il est possible de la faire tourner dans l'autre sens sans aucune résistance. Cette solution purement mécanique est aussi fiable et parfaitement réversible.

Si les deux roues 33 et 34 présentent le même nombre de dents, les deux butées vont venir en appui l'une sur l'autre sensiblement au bout d'un tour d'une roue 33 ou 34. La course angulaire de la tige filetée est alors limitée à un tour si la roue 33 est solidaire de la tige filetée 18. Cela a pour conséquence de limiter l'amplitude de variation de diamètre de la boucle. Le dispositif de cerclage va donc pouvoir fonctionner pour une gamme de diamètre d'objets ou antennes 101 limitée.

Avantageusement, le nombre de dents de la roue 33 est différent du nombre de dents de la roue 34. Ainsi, il est possible de configurer les deux butées 31, 32 de sorte à autoriser une course de la tige filetée 18 correspondant à une course angulaire de plus d'un tour d'une des roues 33 ou 34. La position relative des deux butées 31, 32 va évoluer à chaque tour. Il est alors possible d'augmenter l'amplitude de variation de diamètre de la boucle.

Avantageusement, les nombres de dents des roues 33 et 34 sont premiers entre eux. Leur plus grand diviseur commun PGDC est égal à 1. Cette configuration permet d'autoriser une course angulaire nettement supérieure de la tige filetée 18. La variation de la distance entre les deux extrémités du cerclage 10 et 11 et donc la variation du diamètre de la boucle est alors maximale.

De préférence, la roue présentant le plus petit nombre de dents, ici la première roue 33, est la roue menée. Autrement dit, elle est accouplée à la tige filetée 18 de façon qu'elles présentent une même course angulaire autour de leurs axes de rotation respectifs. Cela permet d'obtenir une course angulaire maximale de la tige filetée 18.

Sur la réalisation des figures, la roue 33 et la tige présentent le même axe de rotation. En variante, cette roue 33 présente un axe de rotation différent de la tige filetée. La roue et la tige filetée sont par exemple accouplées au moyen d'un joint de transmission comme par exemple un joint de cardan ou un joint de Oldham. En variante, l'axe de rotation de la roue 33 est différent de l'axe x et la denture de la roue 33 coopère avec le filetage de la tige filetée 18, par exemple par l'intermédiaire d'une autre roue dentée, pour l'entraîner en rotation.

Avantageusement, comme représenté sur les figures 3a à 3c, la butée 31 et la butée 32 sont configurées (en forme et en dimensions) et agencées pour venir en appui l'une sur l'autre de sorte à limiter une course angulaire de la tige filetée 18 à une première position angulaire extrême, autour de l'axe x, lorsque la tige filetée tourne dans un premier sens de rotation autour de son axe x. Sur l'exemple des figures, la tige filetée étant solidaire de la roue 33, ce sens de rotation est celui de la roue 33 représenté par une flèche sur la figure 3b. Les butées 31 et 32 occupent alors une première position relative représentée sur la figure 3b. Les butées sont aussi configurées et agencées pour venir en appui l'une sur l'autre dans une deuxième position relative (représentée sur la figure 3c) pour limiter la rotation de la tige filetée à une deuxième position angulaire extrême lorsque la tige filetée 18 tourne dans un deuxième sens inverse du premier sens. Ce deuxième sens de rotation est représenté par la flèche montrant le sens de rotation de la roue 33 sur la figure 3c. Autrement dit, dans l'exemple non limitatif de la figure 3, les butées 31, 32 sont agencées pour bloquer le cerclage 5 pour une taille maximale opérationnelle de la boucle (distance minimale entre les extrémités 10 et 11 obtenue lorsque la tige filetée occupe la première position angulaire extrême) et pour une taille minimale opérationnelle de la boucle (distance maximale entre les extrémités 10 et 11 obtenue lorsque la tige filetée occupe la deuxième position angulaire extrême). En outre elles sont configurées et agencées de façon à autoriser la rotation de la tige filetée 18 de la deuxième position angulaire extrême à la première position angulaire extrême dans le premier sens de rotation et de la première position angulaire à la deuxième position angulaire extrême dans le sens inverse.

On note $Z_1$, le nombre de dents de la roue 33 et $Z_2$ est le nombre de dents de la roue 34 avec $Z_1$ différent de $Z_2$.

*PGCD* est le plus grand diviseur commun entre $Z_1$ et $Z_2$, $n_1$ est le nombre de tours de la roue 33 entre la première position relative entre les butées (figure 3b) et la deuxième position relative entre les butées (figure 3c), c'est-à-dire entre la première position angulaire extrême et la deuxième position angulaire extrême dans le deuxième sens, et $n_2$ est le nombre de tours de la roue 34 entre la première position relative et la deuxième position relative.

Alors : $n_1 = \dfrac{Z_2}{PGCD} - \dfrac{\alpha}{\pi} = n_2 * \dfrac{Z_2}{Z_1}$ et $n_2 = \dfrac{Z_1}{PGCD} - \dfrac{\beta}{\pi}$. où $\alpha$ est l'angle formé, dans la première position relative, entre la droite reliant le point d'appui P, entre la butée 31 et la butée 32, et le centre C1 de la roue 33 et la droite reliant les centres C1 et C2 des deux roues 33 et 34. $\beta$ est l'angle formé entre la droite reliant le point d'appui P entre la butée 31 et la butée 32, dans la première position relative, au centre C2 de la roue 34 et la droite reliant les centres C1 et C2 des deux roues 33 et 34. Sur la figure 3c, le point d'appui P' entre les deux butées 31 et 32 est symétrique du point P par rapport à la droite C1, C2.

La course angulaire de la tige filetée 18 entre sa première position angulaire extrême et sa deuxième position angulaire extrême dans le deuxième sens de rotation est ici la course angulaire de la roue 33. Par conséquent, le nombre de tours maximal de la tige 18 est $n_1$ qui est proche du nombre de dents la roue menante 34.

Dans la suite du texte, on entend par première position angulaire extrême et deuxième position angulaire extrême, les positions angulaires de la tige filetée dans lesquelles elle est bloquée par les butées dans les deux sens respectifs. Les valeurs de ces positions angulaires varient selon les modes de réalisation en fonction de la configuration des butées.

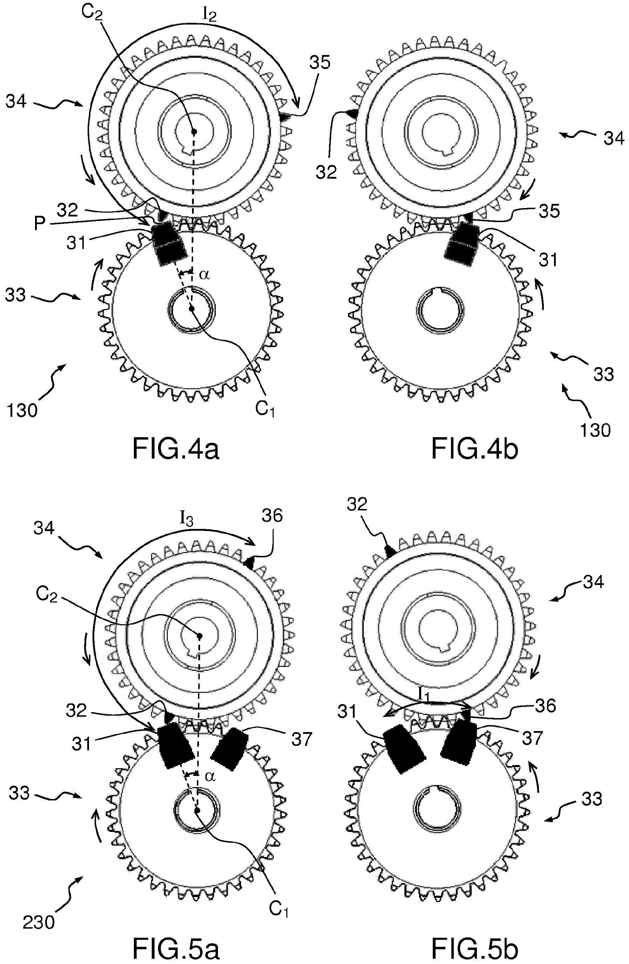

Dans une variante représentée sur les figures 4a et 4b, l'engrenage 130 comprend les deux roues dentées 33 et 34. Il comprend les butées 31 et 32 et une troisième butée 35 liée en rotation à la roue 34 autour de l'axe de rotation de la roue 34. Avantageusement, la troisième butée 35 est agencée de façon à venir en appui sur la première butée 31, lorsqu'elles occupent une position relative représentée sur la figure 4b, pour limiter la course angulaire de la tige filetée 18 à la deuxième position angulaire extrême dans le deuxième sens inverse du premier sens. Autrement dit, les butées sont agencées de sorte que lorsque, partant de sa deuxième position angulaire extrême, elle tourne dans le premier sens de rotation, alors la butée 31 vient d'abord en appui sur la butée 32 (comme représenté sur la figure 4a) pour limiter la course angulaire de la tige filetée 18 dans le premier sens. Elle se trouve alors dans une première position angulaire extrême. Les butées 31, 32, 35 sont aussi agencées pour que, partant de la première position angulaire extrême, la tige filetée 18 se met à tourner dans le deuxième sens de rotation, elle vient en appui sur la butée 35, avant de rencontrer la butée 32. Autrement dit, lorsque partant de sa première position angulaire, la tige filetée 18 se met à tourner dans le deuxième sens de rotation, elle est bloquée par la butée 35 et ne peut pas atteindre la deuxième butée 32. Il est ainsi possible de réduire la course angulaire de la tige filetée 18 et donc la variation de distance entre les extrémités 10 et 11 et la variation de taille de la boucle.

$I_2$, inférieur à $Z_2$, est le nombre d'intervalles entre deux dents adjacentes séparant les butées 32 et 35 de la roue 34, le nombre d'intervalles étant compté en partant de 32 vers 35 dans le sens de rotation de la roue 34 lorsque cette dernière tourne pour se déplacer de la position en butée 32 sur 31 à la position en butée 35 sur 31.

Lorsque la roue 33 comprend une butée et la roue 34 comprend deux butées, alors le nombre $n_3$ de tours de la roue 33 autour de son axe entre les deux positions angulaires extrêmes de la tige filetée est :

$$n_3 \;=\; \min \left\{ \begin{array}{c} \dfrac{Z_2}{PGDC\,\{Z_1; Z_2\}}\,; \\ min\left\{s \in N \;\mid\; \dfrac{I_2 \,+\, s \,*\, Z_2}{Z_2 - Z_1} \in N\right\} \end{array} \right\} \;-\; \dfrac{\alpha}{\pi}$$

Lorsque, partant de la première position angulaire extrême dans laquelle les butées 31 et 32 sont en appui l'une sur l'autre, la tige filetée 18 se met à tourner dans le deuxième sens et vient rencontre la butée 35 avant de rencontrer à nouveau la butée 32 et ainsi bloquer la rotation de la tige 18 dans le deuxième sens, alors:

$$n_3 \;=\; min\left\{s \in N \;\mid\; \dfrac{I_2 \,+\, s \,*\, Z_2}{Z_2 - Z_1} \in N\right\} - \dfrac{\alpha}{\pi}$$

Si la butée 31 n'est pas bloquée par la butée 35 avant la butée 32 dans le deuxième sens, alors :

$$n_3 \;=\; \dfrac{Z_2}{PGDC\,\{Z_1; Z_2\}} - \dfrac{\alpha}{\pi}$$

Il est possible de régler $I_2$ pour obtenir le n1 souhaité.

Ainsi, avec deux roues dentées de 37 et 39 dents, l'une des roues comportant une seule butée et l'autre deux butées placées à 26 dents d'écart, on autorise environ 13 tours de la tige filetée d'une butée à l'autre puisque qu'à chaque tour, la position relative des butées varie de 2 dents.

Pour trouver $I_2$ en fonction de $Z_1$, $Z_2$ et $n_1$ :

$$I_2 \;=\; \min\left\{ s \in N \;\mid\; \left(n_1 + \dfrac{\alpha}{\pi}\right) * (Z_2 - Z_1) - s * Z_2 \in N \right\}$$

En variante, la butée 35 est liée à la roue dentée 33 en rotation autour de l'axe de rotation de la roue 33. Elle est agencée pour venir en appui sur la butée 32 pour empêcher la rotation de la tige filetée 18 dans le deuxième sens lorsque la tige filetée 18 occupe la deuxième position angulaire extrême.

Dans une variante représentée sur les figures 5a et 5b, l'engrenage 230 comprend les deux roues 33 et 34. Les butées 31 et 32 sont avantageusement configurées et agencées pour venir en appui l'une sur l'autre lorsqu'elles occupent une première position relative représentée sur la figure 5a, de sorte à limiter une course angulaire de la tige filetée 18 à la première position angulaire extrême dans le premier sens de rotation de la tige filetée 18. L'engrenage 230 comprend également une première butée supplémentaire 36, liée à la roue 34 en rotation autour de l'axe de rotation de la roue 34, et une deuxième butée supplémentaire 37, liée à la roue 33 en rotation autour de l'axe de rotation de la roue 33, la première butée supplémentaire 36 et la deuxième butée supplémentaire 37 sont configurées et agencées pour venir en appui l'une sur l'autre de sorte à limiter la course angulaire de la tige filetée 18 à une deuxième position angulaire extrême dans le deuxième sens. Autrement dit, le blocage de la tige filetée se fait par appui de deux butées 31, 32 l'une sur l'autre dans un sens et par appui de deux autres butées 36, 37 l'une sur l'autre dans l'autre sens. Les butées sont configurées et agencées pour permettre à la tige filetée d'aller de sa première position angulaire extrême à sa deuxième position angulaire extrême dans le premier sens et inversement, dans le sens inverse. Cette solution permet de régler avec plus de précision la course angulaire de la tige filetée 18 entre les deux positions de blocage. Dans les solutions à 2 ou 3 butées, il est possible d'obtenir des nombres de tours de la roue 33 par pas de 1 tour avec le décalage angulaire de $\alpha/\Pi$. La quatrième butée permet de régler le nombre de tours avec une meilleure précision. On positionne et on configure les butées les unes par rapport aux autres en fonction de la course angulaire souhaitée pour la tige filetée, des nombres de dents des deux roues et des angles formés entres les butées et l'axe entre les centres de roues dans les positions relatives de blocage.

$I_3$, inférieur à $Z_2$, est le nombre d'intervalles entre deux dents adjacentes entre les butées 32 et 36 de la roue 34, le nombre d'intervalles étant compté en partant de 32 vers 36 dans le sens de rotation de la roue 34 lorsque celle-ci tourne pour se déplacer de la position en butée 31 contre 32 à la position en butée 36 contre 37.

$I_1$, inférieur à $Z_1$, est le nombre d'intervalles entre deux dents adjacentes entre les butées 31 et 37 de la roue 33, le nombre d'intervalle étant compté en partant de 31 vers 37 dans le sens de rotation de la roue 34 lorsque celle-ci tourne pour se déplacer de la position en butée 31 contre 32 à la position en butée 36 contre 37.

Le nombre $n_4$ de tours de la roue 33 autour de son axe entre les deux positions angulaires extrêmes de la tige filetée lorsque les deux roues comprennent chacune deux butées est alors :

$$n_4 = min \left\{ \begin{array}{c} A = \dfrac{Z_2}{PGCD\,\{Z_1; Z_2\}} \\ ; \\ B = min\left\{ s \in N \mid \dfrac{I_3 + s*Z_2}{Z_2 - Z_1} \in N \right\} \\ ; \\ C = \dfrac{I_1}{Z_1} + min\left\{ s \in N \mid \dfrac{I_1 + (s-1)*Z_2}{Z_2 - Z_1} \in N \right\} \\ ; \\ D = \dfrac{I_1}{Z_1} + min\left\{ s \in N \mid \dfrac{I_1 + I_3 + (s-1)*Z_2}{Z_2 - Z_1} \in N \right\} \end{array} \right\} - \dfrac{\alpha}{\pi}$$

$n_4$ = A lorsque c'est l'appui des butées 31 et 32 l'une sur l'autre qui bloque le mouvement de rotation de la tige dans les deux sens. $n_4$ = B lorsque c'est l'appui des butées 31 et 32 l'une sur l'autre qui bloque la rotation de la tige filetée dans le premier sens et l'appui des butées 31 et 36 l'une sur l'autre qui bloque la rotation de la tige dans l'autre sens. $n_4$ = C lorsque c'est l'appui des butées 31 et 32 l'une sur l'autre qui bloque la rotation de la tige filetée dans le premier sens et l'appui des butées 32 et 37 l'une sur l'autre qui bloquent la rotation de la tige dans l'autre sens. $n_4$ = D lorsque c'est l'appui des butées 31 et 32 l'une sur l'autre qui bloque la rotation de la tige filetée dans le premier sens et l'appui des butées 36 et 37 qui bloquent la rotation de la tige dans l'autre sens.

Pour configurer les butées, il faut déterminer d'abord $I_1$ à partir de la valeur $n_4$ recherchée :

$$I_1 = Z_1 * min\left\{ s \in N \mid n_4 - s \geq \dfrac{\alpha}{\pi} \right\}$$

Puis configurer $I_3$ :

$$I_3 = min\left\{ s \in N \mid \left( n_4 + \dfrac{\alpha}{\pi} - \dfrac{I_1}{Z_1} \right) * (Z_2 - Z_1) + (1-s)*Z_2 - I_1 \in N \right\}$$

Il n'est cependant pas possible, pour deux valeurs $Z_1$ et $Z_2$ données, de configurer toutes les valeurs de

$$n_4 \in \left\{ s \in \frac{N}{Z_1} \mid s - \frac{\alpha}{\pi} \right\}$$ car il y peut y avoir une rencontre des butées 36 sur 31 ou 32 sur 37 avant la rencontre de la butée 36 sur la butée 37. Il faut donc le vérifier à l'aide de la formule donnée précédemment $n_4$ = min (A, B, C, D).

Sur les réalisations des figures, les butées sont des ergots superposés à la denture d'une des roues. On a référencé la denture 38 de la première roue 33 et la denture 39 de la deuxième roue 34 uniquement sur la figure 3a.

Sur la réalisation des figures, la deuxième butée 32 est superposée à une des dents de la deuxième roue 34 et présente une section de même forme et de même taille qu'une dent de la roue 34 dans un plan perpendiculaire à l'axe de rotation de la roue 34.

La première butée 31 présente une surface d'appui S, formant, dans un plan perpendiculaire à l'axe x de la première roue, sensiblement une forme d'une portion de cercle sensiblement superposé au cercle de plus grand diamètre délimitant les dents de la roue dentée et présentant une ouverture angulaire sensiblement égale à l'ouverture d'une dent à une autre dent adjacente de la roue 33 autour de l'axe de rotation de la roue 33. Les deux butées 31 et 32 s'étendent à une même position le long de l'axe longitudinal de la tige filetée 18. Ainsi l'extrémité radiale de la deuxième butée 32 vient en contact avec la surface d'appui S de la première butée lorsqu'elles se retrouvent l'une en regard de l'autre. Cette coopération de forme permet dans le cas de la figure 3a, un appui en un même lieu de chacune des deux butées dans les deux sens du fait de la symétrie des deux butées par rapport à des plans radiaux comprenant chacun l'axe de rotation de la roue correspondante. La butée 31 forme avec l'axe C1-C2 un angle $\alpha$ et la butée 32 forme avec l'axe C1-C2 un angle $\beta$ lorsqu'elles sont dans la deuxième position relative.

En variante, au moins une des butées est asymétrique par rapport à un plan radial comprenant l'axe de rotation de la roue. Dans ce cas, les butées 31 et 32 forment des angles différents de $\alpha$ et respectivement $\beta$ lorsqu'elles sont dans la deuxième position relative.

Les butées sont positionnées de sorte que les angles $\alpha$ et $\beta$ du point d'appui entre ces deux butées soient non nuls afin que les butées assurent le blocage en rotation.

Il est possible d'élargir au moins un des butées de sorte à élargir la zone de contact entre les butées et la pression. La course angulaire est alors réduite.

Avantageusement, la distance radiale maximale de chaque butée à l'axe de rotation de la roue de laquelle elle est solidaire est sensiblement égale au rayon du cercle de tête de la roue dentée. De façon générale, la somme des distances maximales radiales relatives à deux butées destinées à coopérer pour assurer le blocage dans un sens est supérieure ou égale à l'entraxe entre les deux roues, sinon il n'y aurait pas contact.

Chaque butée est liée à une roue en rotation autour de l'axe de rotation de la roue. La butée est avantageusement solidaire de la roue en rotation autour de l'axe de rotation de la roue.

Avantageusement, chaque butée est solidaire de la roue correspondante. Autrement dit, elle est fixe par rapport à la roue correspondante.

Les butées peuvent être monobloc avec les roues dentées ou bien fixées aux roues dentées.

Dans un mode de réalisation, les butées sont susceptibles d'occuper une unique position angulaire définie par rapport à la roue correspondante autour de son axe de rotation. Elles sont alors par exemple fixées par emboitage aux roues respectives correspondantes ou sont monoblocs avec les roues respectives correspondantes ou fixées de manière définitive sur ces dernières. Ainsi le réglage de la course angulaire de la tige filetée 18 ou de ses positions angulaires extrêmes se fait par construction lors de l'installation des deux roues 33 et 34 sur le bâti 19 en choisissant les positions angulaires des deux roues 33 et 34 en fonction des positions des butées sur les roues dentées.

En variante, au moins une butée de l'ensemble de butées est susceptible d'occuper une pluralité de positions angulaires fixes prédéterminées par rapport à la roue correspondante 33 ou 34 autour de l'axe de rotation de la roue. Autrement dit, la position fixe de la butée considérée par rapport à la roue considérée est réglable. Il est possible de venir la régler par réglage de la position d'une ou de plusieurs butées, après montage des roues dentées. La course angulaire de la tige peut alors être réglée en fonction des besoins en termes d'amplitude de variation de la taille de la boucle et/ou de la taille maximale opérationnelle et/ou de la taille minimale opérationnelle souhaitées, une fois après montage des roues sur le bâti. La butée peut être montée sur la roue correspondante au moyen d'un dispositif d'indexation permettant de régler sa position angulaire par rapport à la roue autour de l'axe de rotation de la roue. La liaison mécanique permettant l'indexation peut être réalisé, indifféremment, par piétage, par vissage, par clavetage ou tout autre moyen.

Avantageusement, au moins une des butées est fixée de façon amovible sur la roue correspondante et est susceptible d'occuper une pluralité de positions angulaires fixes prédéterminées par rapport à la roue correspondante autour de l'axe de rotation de la roue. L'amplitude de variation de la taille de la boucle et/ou la taille minimale opérationnelle et la taille maximale opérationnelle de la boucle sont réglables après montage des roues, par positionnement de la butée démontable sur la roue considérée.

Avantageusement, le dispositif d'entraînement 15 comprend, comme visible sur la figure 6, un moteur 50 permettant d'entraîner la tige filetée 18 en rotation autour de l'axe x. Le moteur 50 permet d'entraîner la roue 34 en rotation autour de son axe. L'engrenage 30 transmet ce mouvement à la tige filetée via la roue 33. Le moteur 50 est par exemple couplé à la roue 34 par l'intermédiaire d'un réducteur non représenté.

Le dispositif d'entraînement 15 comprend également une molette 52 accouplée à la deuxième roue 34. La molette 52 permet à un opérateur de faire tourner la deuxième roue 34 autour de son axe p. Dans ce cas lors d'un actionnement manuel de la molette, le couple imprimé par l'opérateur est transmis à la tige filetée par l'intermédiaire des roues dentées 34, 33 et le réducteur 51 et le moteur 50 sont inertes. En variante la molette 52 est liée en rotation à la première roue 33.

Avantageusement, le dispositif 15 comprend un limiteur de couple 54 configuré et agencé pour supprimer la transmission de couple entre le moteur 50 et la tige filetée 18 lorsque le couple autour de l'axe de la tige filetée dépasse un seuil prédéterminé.

Avantageusement, le dispositif 15 comprend un limiteur de couple 54 et une roue libre 55 configurés et agencés pour permettre la limitation d'un couple de rotation de la tige filetée 18 autour de l'axe x dans un sens de rotation uniquement où la roue libre 55 permet une rotation et donc un glissement dans le limiteur de couple. Dans l'autre sens, la roue libre ne permet aucune rotation et le limiteur de couple ne peut agir. Avantageusement, ce sens de rotation est le sens correspondant au serrage, c'est-à-dire le sens de rotation provoquant l'éloignement des deux extrémités 10 et 11 l'une de l'autre. Ce dispositif permet d'éviter que le couple de serrage ne vienne dépasser un seuil prédéterminé qui est le même quelque soit le diamètre de l'antenne. En revanche, le limiteur de couple n'agit pas dans le sens du desserrage. Le système de butées selon l'invention est parfaitement compatible avec le limiteur de couple.

La figure 6 représente un schéma cinématique simplifié du dispositif d'entraînement. Les liaisons hélicoïdales 220 et 221 entre les écrous 20 et respectivement 21 et la tige filetée sont représentées. Les liaisons pivot 218 et 340 entre le bâti 19 et tige filetée 18 et respectivement la roue 34 sont également représentées. Les liaisons empêchant la rotation des écrous par rapport au bâti ne sont pas représentées.

Le moteur est couplé à la deuxième roue 34 par l'intermédiaire du limiteur de couple 54 et de l'éventuelle roue libre 55. La roue libre 55 permet d'accoupler/désaccoupler deux arbres 56, 57 liés au bâti 19 par des liaisons pivot 340, 341. Un premier arbre 56 est solidaire de la roue 34 et l'autre 57 est un arbre du moteur 50. Les butées 31, 32 et le moteur 50 sont reliés par le limiteur de couple 54 et la roue libre 55. Cela permet d'éviter un déréglement de la position des butées par rapport à la position du cerclage obtenu dans une variante dans laquelle la première roue dentée 33 est couplée à la tige filetée 18 par l'intermédiaire du limiteur de couple 54 et de la roue libre 55.

Avantageusement, les butées sont configurées et agencées de façon à empêcher la rotation relative des deux roues dentées lorsque le moteur tourne à vitesse maximale sans que les butées ne soient endommagées. Autrement dit, les butées sont configurées et agencées de façon à supporter sans dommage, un arrêt brutal à une vitesse maximale du moteur.

Avantageusement, les butées sont configurées de façon à empêcher la rotation relative des deux roues dentées pour un couple maximal prédéterminé appliqué à l'axe x de la tige filetée 18 sans que les butées ne soient endommagées. Ce couple est avantageusement supérieur au couple maximal appliqué par un opérateur à poigne qui forcerait sur la molette.

Sur la réalisation des figures, la bande de serrage 6 forme une boucle fermée. Autrement dit, la bande de serrage comprend deux brins de bande 7 et 8 référencés sur la figure 2 comprenant chacun une extrémité 10 et 11 de la bande de serrage 6 et se croisant de sorte qu'une boucle fermée destinée à entourer complètement l'objet à enserrer, c'est-à-dire à faire un tour complet autour de l'objet, est formée par la bande de serrage 6. L'utilisation d'une bande 6 formant une boucle fermée par croisement de deux brins de bande permet de faire varier de façon significative la taille de la boucle et ainsi de venir enserrer et libérer des objets présentant des diamètres différents. Les deux extrémités 10 et 11 s'éloignent l'une de l'autre, tout comme les écrous, selon l'axe x lors du serrage et se rapprochent l'une de l'autre, tout comme les écrous, selon l'axe x lors du desserrage. En variante, la boucle est ouverte.

Avantageusement, comme représenté sur la figure 6, le dispositif d'entraînement 15 comprend un organe de commande 61. Il comprend également un ou plusieurs capteurs de position 70, 80, visibles sur la figure 2, configuré(s) pour détecter une taille minimale limite de la boucle, supérieure à la taille minimale opérationnelle de la boucle dans le sens du serrage et/ou une taille maximale limite de la boucle inférieure à la taille maximale opérationnelle de la boucle dans le sens du desserrage. Autrement dit, de façon plus générale, il comprend au moins un capteur permettant de détecter une première position angulaire limite de la tige filetée dans le premier sens qui précède la première position angulaire extrême dans le premier sens de rotation et/ou au moins un capteur (pouvant être identique ou différent du capteur) permettant de détecter une deuxième position angulaire limite de la tige filetée dans le deuxième sens précédent la deuxième position angulaire extrême dans le deuxième sens de rotation. L'organe de commande 61 reçoit des informations du ou des capteur(s) et est avantageusement configuré pour arrêter le moteur 50 lorsque la taille minimale limite dans le sens du serrage est atteinte (ici lorsque la tige filetée tourne dans le premier sens et atteint la première position angulaire limite) et pour arrêter le moteur lorsque la taille maximale limite dans le sens du desserrage est atteinte (ici lorsque la tige filetée tourne dans le deuxième sens et atteint la deuxième position angulaire limite) de préférence avant que la taille minimale opérationnelle (correspondant à la première position angulaire extrême définie par les butées) ou respectivement la taille maximale opérationnelle (correspondant à la deuxième position angulaire extrême définie par les butées) ne soit atteinte.

Les capteurs de position 70, 80 sont avantageusement sensibles à une variation de distance relative entre les deux extrémités 10 et 11 selon l'axe x. Sur l'exemple non limitatif de la figure 2, les capteurs comprennent chacun un interrupteur à bouton poussoir 71 et respectivement 81 respectivement fixés aux écrous 20 et 21 et un actionneur 72 qui est ici commun aux deux capteurs et réalisé sous forme de butée. La butée 72 est disposée entre les deux écrous 20 et 21, est fixée à un écrou 24 en liaison hélicoïdale, au moyen d'une liaison hélicoïdale 223 représentée su la figure 6, avec la tige 18, fixe en rotation autour de l'axe x par rapport au bâti 19 en prise avec un troisième filetage 73 réalisé dans le même sens que le filetage 23 présentant un pas supérieur au pas du filetage 23. Le capteur 70 est configuré et agencé pour passer d'une configuration fermée à ouverte ou inversement lorsque l'extrémité 10 occupe, selon l'axe x, une position correspondant à la taille maximale limite de la boucle et le capteur 80 est configuré et agencé pour passer d'une configuration fermée à ouverte ou inversement lorsque l'extrémité 11 occupe, selon l'axe x, une position correspondant à la taille minimale limite de la boucle. En variante, l'agencement des deux parties du capteur est différent. Les capteurs peuvent comprendre un actionneur chacun disposé à l'extérieur de l'espace entre les deux écrous le long de l'axe x et en prise chacun sur un filetage différent. En variante, au moins un capteur est d'un autre type, par exemple optique ou magnétique. En variante, au moins un capteur comprend une partie fixée au bâti et un capteur fixé à un des écrous.

Les manœuvres de serrage ou de desserrage d'un objet au moyen du dispositif de cerclage peuvent être effectuées de deux manières : électriquement avec des enchaînements de séquences automatiques au moyen du dispositif de commande et manuellement grâce à la poignée molette lorsque le dispositif de commande et/ou le moteur ne sont pas sous tension (généralement dans les cas de maintenance). Dans les cas de manœuvres automatiques électriques, les courses sont maîtrisées grâce à l'ensemble de capteurs (contacteurs). Dans le cas de manœuvres manuelles par la molette, les contacteurs ne sont d'aucune utilité pour faire cesser le mouvement. On se trouve alors devant le problème de devoir limiter les efforts ou stopper la course du système vis-écrous. Dans le cas du serrage, lorsqu'aucun objet ne pénètre dans le cerclage, ou lorsqu'elle n'est pas entièrement arrivée à poste, le serrage ne peut avoir lieu. Il convient alors de stopper le serrage avant que le dispositif d'entraînement ne soit endommagé (notamment les contacteurs). Dans le cas du desserrage, il s'agit de limiter l'élargissement du cerclage pour qu'il ne vienne pas en butée au fond de son logement formé au sein du bâti de façon que le resserrage du cerclage soit ensuite encore possible. En effet, le limiteur de couple n'agissant que dans le sens du serrage, le resserrage pourrait s'avérer impossible par un opérateur moins fort ou un moteur ne pouvant pas imprimer un couple suffisant. La solution proposée autorise un élargissement et/ou un resserrement limités du cerclage ce qui empêche toute détérioration du cerclage et d'éviter tout coincement du cerclage que ce soit en cas de manœuvre manuelle ou en cas de défaillance de l'organe de commande d'un capteur ou du moteur.

L'organe de commande peut comprendre un ou plusieurs circuits électroniques dédiés ou un circuit à usage général. Chaque circuit électronique peut comprendre une machine de calcul reprogrammable (un processeur ou un micro contrôleur par exemple) et/ ou un calculateur exécutant un programme comprenant une séquence d'instructions et/ou une machine de calcul dédiée (par exemple un ensemble de portes logiques comme un FPGA un DSP ou un ASIC, ou tout autre module matériel).

En variante, la bande de serrage 6 ne forme pas une boucle fermée mais forme une boucle ouverte. Dans ce cas ses extrémités se rapprochent lors du serrage et s'éloignent lors du desserrage.

La bande de serrage 6 comprend par exemple un feuillard métallique ou une bande en matière plastique. Le périmètre ou taille de la boucle varie par exemple, lors du serrage, par une variation de la flexion de la bande de serrage. La bande présente avantageusement une forme au repos telle qu'elle que la partie centrale suit sensiblement la forme du périmètre de l'objet à enserrer.

Le cerclage comprend aussi des patins 14 répartis le long de la bande de serrage de sorte à être destinés à être interposés entre la bande de serrage 6 et l'objet à enserrer. Un patin, non représenté peut être prévu en regard de la zone où les brins de bande 7 et 8 de croisent.

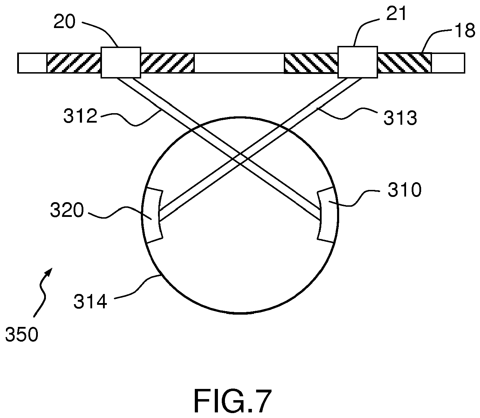

Le dispositif d'entraînement selon l'invention peut être intégré dans un autre type de dispositif de maintien 350 tel que représenté sur la figure 7 du type comprenant deux semelles 310 et 320 respectivement fixées en translation le long de l'axe x à l'écrou 20 et à l'écrou 21 via des barres 312 et respectivement 313 qui se croisent. Pour plus de clarté, on n'a représenté que la tige filetée (sans le troisième filetage), les écrous, les semelles et les barres 312, 313 mais le dispositif d'entraînement est un dispositif d'entraînement selon l'invention. Lorsque la tige 18 tourne dans un sens les écrous 20 et 21 se rapprochent et les semelles 310, 320 s'écartent de sorte à venir en appui sur un corps creux 314, par exemple à section cylindrique, à l'intérieur du corps creux de sorte à exercer des efforts en sens inverse parallèlement à l'axe x, par exemple opposés, sur le corps creux pour serrer le corps. Ces efforts sont avantageusement radiaux, selon un même axe radial défini pour une section circulaire d'un corps creux. Lorsque la tige tourne dans le sens inverse, les écrous s'éloignent et les semelles se rapprochent de sorte à s'écarter du corps creux et à le libérer. En variante, le sens de déplacement des semelles est celui des écrous. Par exemple, les barres 312 et 313 ne se croisent pas. Avantageusement, le limiteur de couple 54 et l'éventuelle roue libre 55 sont agencés pour permettre la limitation d'un couple de rotation de la tige filetée 18 autour de l'axe x dans un sens de rotation, et éventuellement uniquement dans ce sens. Ce sens de rotation est le sens correspondant au serrage, c'est-à-dire le sens de rotation provoquant l'éloignement des deux semelles et donc le rapprochement des deux écrous.

**Revendications**

1. Dispositif d'entraînement comprenant :

   - un système vis-écrou (17) comprenant une tige filetée (18) et un premier écrou (20; 21) lié à la tige filetée (18) au moyen d'une liaison hélicoïdale,
   - un engrenage (30), permettant de transmettre un mouvement de rotation à la tige filetée (18), l'engrenage comprenant une première roue dentée (33) et une deuxième roue dentée (34) en prise avec la première roue dentée (33),

   **caractérisé en ce que** le dispositif d'entraînement comprend :

   - un ensemble de butées (31, 32) comprenant une première butée (31) liée à la première roue (33) en rotation autour d'un axe de rotation de la première roue (33) et une deuxième butée (32) liée à la deuxième roue dentée (34) en rotation autour d'un axe de rotation de la deuxième roue (34), la première butée (31) et la deuxième butées (32) étant configurées et agencées pour venir en appui l'une sur l'autre de sorte à limiter une course angulaire de la tige filetée (18) à une première position angulaire dans un premier sens.

2. Dispositif d'entraînement selon la revendication précédente, dans lequel la première butée (31) et la deuxième butée (32) sont configurées et agencées pour venir en appui l'une sur l'autre de sorte à limiter la course angulaire de la tige filetée (18) à une deuxième position angulaire dans un deuxième sens inverse du premier sens.

3. Dispositif d'entraînement selon la revendication 1, dans lequel l'ensemble de butées comprend une troisième butée (35) liée à la première roue (33) en rotation autour de l'axe de rotation de la première roue (33) ou liée à la deuxième roue dentée (34) en rotation autour de l'axe de rotation de la deuxième roue (34) et configurée et agencée de façon à venir en appui sur la deuxième butée (32), ou respectivement sur la première butée (31), pour limiter la course angulaire de la tige filetée (18) à une deuxième position angulaire dans un deuxième sens inverse du premier sens.

4. Dispositif d'entraînement selon la revendication 1, dans lequel l'ensemble de butées comprend une première butée supplémentaire (36) liée à la deuxième roue dentée (34) en rotation autour de l'axe de rotation de la deuxième roue (34) et une deuxième butée supplémentaire (37) liée à la première roue (33) en rotation autour de l'axe de rotation de la première roue (33), la première butée supplémentaire et la deuxième butée supplémentaire étant configurées et agencées pour venir en appui l'une sur l'autre de sorte à limiter une course angulaire de la tige filetée (18) à une deuxième position angulaire dans le deuxième sens inverse du premier sens.

5. Dispositif d'entraînement selon l'une quelconque des revendications précédentes, dans lequel la première roue dentée (33) présente un premier nombre de dents et la deuxième roue dentée présente un deuxième nombre de dents différent du premier nombre de dents.

6. Dispositif d'entraînement selon la revendication précédente, dans lequel le premier nombre de dents et le deuxième nombre de dents sont premiers entre eux.

7. Dispositif d'entraînement selon l'une quelconque des revendications précédentes, dans lequel au moins une butée de l'ensemble de butées est susceptible d'occuper une pluralité de positions angulaires fixes prédéterminées, par rapport à la roue à laquelle elle est liée en rotation, autour de l'axe de rotation de la roue.

8. Dispositif d'entraînement selon la revendication précédente, dans lequel au moins une butée est montée de manière amovible sur la première roue ou sur la deuxième roue à une position angulaire prise parmi une pluralité de positions angulaires.

9. Dispositif d'entraînement selon l'une quelconque des revendications précédentes, comprenant un moteur (50) couplé à la tige filetée (18) et permettant d'entraîner la tige filetée (18) en rotation autour de l'axe longitudinal.

10. Dispositif d'entraînement selon la revendication précédente, dans lequel la tige filetée (18) est couplée au moteur (50) par l'intermédiaire d'un limiteur de couple (54).

11. Dispositif d'entraînement selon l'une quelconque des revendications 9 à 10, dans lequel la tige filetée (18) est couplée au moteur (50) par l'intermédiaire d'un limiteur de couple (54) et d'une roue libre (55) configurés pour permettre la limitation d'un couple de rotation de la tige filetée (18) selon son axe longitudinal dans un sens de rotation uniquement.

12. Dispositif d'entraînement selon l'une quelconque des revendications 9 à 11, comprenant un organe de commande (61) et au moins un capteur permettant de détecter une première position angulaire maximale opérationnelle de la tige filetée (18) dans le premier sens précédent la première position angulaire dans le premier sens, l'organe de commande (61) recevant des mesures issues du premier capteur de position et étant configuré pour commander le moteur (50) à partir des mesures du capteur pour arrêter le moteur lorsque la première position angulaire limite est atteinte.

13. Dispositif d'entraînement selon l'une quelconque des revendications précédentes, comprenant une molette solidaire d'une roue dentée de l'engrenage (30) permettant à un opérateur de faire tourner ladite roue dentée autour d'un axe de rotation de ladite roue dentée.

14. Dispositif de cerclage permettant de ceinturer un objet comprenant une bande de serrage comprenant une première extrémité (10) et une deuxième extrémité (11) et formant une boucle destinée à entourer l'objet, le dispositif de cerclage comprenant un dispositif d'entraînement selon l'une quelconque des revendications précédentes, le dispositif d'entraînement permettant de déplacer les deux extrémités l'une par rapport à l'autre pour agrandir ou réduire la taille de la boucle, la première extrémité (10) du cerclage (6) étant solidaire du premier écrou en translation selon l'axe de la tige filetée (18).

15. Dispositif de cerclage selon la revendication précédente, dans lequel le premier écrou est en prise avec un premier filetage de la tige filetée, le système vis-écrou comprenant un deuxième écrou en prise avec un deuxième filetage de la tige filetée réalisé en sens inverse du premier filetage, la deuxième extrémité de la bande de serrage étant solidaire du deuxième écrou en translation selon l'axe de la tige filetée (18).

16. Dispositif de maintien permettant de serrer un objet creux, ledit dispositif comprenant une première semelle et une deuxième semelle aptes à venir en appui sur un objet creux, à l'intérieur de l'objet, le dispositif de maintien comprenant un dispositif d'entraînement selon l'une quelconque des revendications 1 à 13, configuré pour déplacer les deux semelles l'une par rapport à l'autre de sorte à les écarter l'une de l'autre pour venir serrer l'objet ou les rapprocher pour libérer l'objet, la première semelle étant solidaire du premier écrou en translation selon l'axe de la tige filetée (18), le système vis-écrou comprenant un deuxième écrou en prise avec un deuxième filetage réalisé en sens inverse du premier filetage, la deuxième semelle étant solidaire du deuxième écrou en translation selon l'axe de la tige filetée (18).

**Patentansprüche**

1. Antriebsvorrichtung, die Folgendes umfasst:

- ein Schrauben-Mutter-System (17) mit einem Gewindestab (18) und einer ersten Mutter (20; 21), die mittels einer schraubenförmigen Verbindung mit dem Gewindestab (18) verbunden ist,
- ein Getriebe (30) zum Übertragen einer Drehbewegung auf den Gewindestab (18), wobei das Getriebe ein erstes Zahnrad (33) und ein mit dem ersten Zahnrad (33) in Eingriff stehendes zweites Zahnrad (34) umfasst,

**dadurch gekennzeichnet, dass** die Antriebsvorrichtung Folgendes umfasst:

- einen Satz von Anschlägen (31, 32) mit einem ersten Anschlag (31), der mit dem ersten Rad (33) in Drehung um eine Drehachse des ersten Rades (33) verbunden ist, und einem zweiten Anschlag (32), der mit dem zweiten Zahnrad (34) in Drehung um eine Drehachse des zweiten Rades (34) verbunden ist, wobei der erste Anschlag (31) und der zweite Anschlag (32) so konfiguriert und ausgelegt sind, dass sie aneinanderstoßen, um einen Winkelhub des Gewindestabs (18) auf eine erste Winkelposition in einer ersten Richtung zu begrenzen.

2. Antriebsvorrichtung nach dem vorhergehenden Anspruch, wobei der erste Anschlag (31) und der zweite Anschlag (32) so konfiguriert und ausgelegt sind, dass sie aneinanderstoßen, um den Winkelhub des Gewindestabs (18) auf eine zweite Winkelposition in einer zweiten Richtung entgegengesetzt zur ersten Richtung zu begrenzen.

3. Antriebsvorrichtung nach Anspruch 1, wobei der Satz von Anschlägen einen dritten Anschlag (35) umfasst, der mit dem ersten Rad (33) in Drehung um die Drehachse des ersten Rades (33) oder mit dem zweiten Zahnrad (34) in Drehung um die Drehachse des zweiten Rades (34) verbunden und so konfiguriert und ausgelegt ist, dass er an den zweiten Anschlag (32) oder bzw. den ersten Anschlag (31) stößt, um den Winkelhub des Gewindestabs (18) auf eine zweite Winkelposition in einer zweiten Richtung entgegengesetzt zur ersten Richtung zu begrenzen.

4. Antriebsvorrichtung nach Anspruch 1, wobei der Satz von Anschlägen einen ersten zusätzlichen Anschlag (36), der mit dem zweiten Zahnrad (34) in Drehung um die Drehachse des zweiten Rades (34) verbunden ist, und einen zweiten zusätzlichen Anschlag (37) umfasst, der mit dem ersten Rad (33) in Drehung um die Drehachse des ersten Rades (33) verbunden ist, wobei der erste zusätzliche Anschlag und der zweite zusätzliche Anschlag so konfiguriert und ausgelegt sind, dass sie aneinanderstoßen, um einen Winkelhub des Gewindestabs (18) auf eine zweite Winkelposition in der zweiten Richtung entgegengesetzt zur ersten Richtung zu begrenzen.

5. Antriebsvorrichtung nach einem der vorhergehenden Ansprüche, wobei das erste Zahnrad (33) eine erste Anzahl von Zähnen aufweist und das zweite Zahnrad eine zweite Anzahl von Zähnen aufweist, die sich von der ersten Anzahl von Zähnen unterscheidet.

6. Antriebsvorrichtung nach dem vorhergehenden Anspruch, wobei die erste Anzahl von Zähnen und die zweite Anzahl von Zähnen primär zueinander sind.

7. Antriebsvorrichtung nach einem der vorhergehenden Ansprüche, wobei mindestens ein Anschlag des Satzes von Anschlägen eine Vielzahl von vorbestimmten festen Winkelpositionen relativ zu dem Rad einnehmen kann, mit dem er in Drehung um die Drehachse des Rades verbunden ist.

8. Antriebsvorrichtung nach dem vorhergehenden Anspruch, wobei mindestens ein Anschlag am ersten Rad oder am zweiten Rad in einer von einer Vielzahl von Winkelpositionen lösbar montiert ist.

9. Antriebsvorrichtung nach einem der vorhergehenden Ansprüche umfassend einem Motor (50), der mit dem Gewindestab (18) gekoppelt ist und es zulässt, den Gewindestab (18) um die Längsachse in Drehung zu versetzen.

10. Antriebsvorrichtung nach dem vorhergehenden Anspruch, wobei der Gewindestab (18) über einen Drehmomentbegrenzer (54) mit dem Motor (50) gekoppelt ist.

11. Antriebsvorrichtung nach einem der Ansprüche 9 bis 10, wobei der Gewindestab (18) mit dem Motor (50) über einen Drehmomentbegrenzer (54) und einen Freilauf (55) gekoppelt ist, die so konfiguriert sind, dass sie die Begrenzung eines Drehmoments des Gewindestabs (18) entlang seiner Längsachse nur in einer Drehrichtung ermöglichen.

12. Antriebsvorrichtung nach einem der Ansprüche 9 bis 11, umfassend eine Steuerung (61) und mindestens einen Sensor zum Erfassen einer ersten maximalen Betriebswinkelposition des Gewindestabs (18) in der ersten Richtung, die der ersten Winkelgrenzposition in der ersten Richtung vorausgeht, wobei die Steuerung (61) Messwerte vom ersten Positionssensor empfängt und zum Steuern des Motors (50) auf der Basis der Messwerte des Sensors konfiguriert ist, um den Motor anzuhalten, wenn die erste Winkelgrenzposition erreicht ist.

13. Antriebsvorrichtung nach einem der vorhergehenden Ansprüche, umfassend ein Rändelrad das an einem Zahnrad des Getriebes (30) befestigt ist und es einer Bedienungsperson ermöglicht, das Zahnrad um eine Drehachse des Zahnrads zu drehen.

14. Umreifungsvorrichtung zum Umschnallen eines Gegenstandes umfassend ein Spannband, das ein erstes Ende (10) und ein zweites Ende (11) umfasst, und einen Ring bildet, zum Umschließen des Gegenstands, wobei die Umreifungsvorrichtung eine Antriebsvorrichtung nach einem der vorhergehenden Ansprüche umfasst, wobei es die Antriebsvorrichtung ermöglicht, die beiden Enden relativ zueinander zu bewegen, um die Größe des Rings zu vergrößern oder zu verkleinern, wobei das erste Ende (10) der Umreifung (6) an der ersten Mutter in Translation entlang der Achse des Gewindestabs (18) befestigt ist.

15. Umreifungsvorrichtung nach dem vorhergehenden Anspruch, wobei die erste Mutter mit einem ersten Gewinde des Gewindestabs in Eingriff steht, wobei das Schrauben-Mutter-System eine zweite Mutter umfasst, die mit einem zweiten Gewinde des Gewindestabs in Eingriff steht, das in entgegengesetzter Richtung zum ersten Gewinde ausgeführt ist, wobei das zweite Ende des Spannbandes an der zweiten Mutter in Translation entlang der Achse des Gewindestabs (18) befestigt ist.

16. Haltevorrichtung zum Festziehen eines hohlen Gegenstandes, wobei die Vorrichtung eine erste Grundplatte und eine zweite Grundplatte umfasst, die auf einem hohlen Gegenstand aufliegen können, im Innern des Gegenstands, , wobei die Haltevorrichtung eine Antriebsvorrichtung nach einem der Ansprüche 1 bis 13 umfasst, die zum Bewegen der beiden Grundplatten relativ zueinander konfiguriert ist, um sie voneinander zu entfernen, um den Gegenstand festzuziehen, oder sie zusammenzuführen, um den Gegenstand freizugeben, wobei die erste Grundplatte an der ersten Mutter in Translation entlang der Achse des Gewindestabs (18) befestigt ist, wobei das Schrauben-Mutter-System eine zweite Mutter umfasst, die mit einem zweiten Gewinde in Eingriff steht, das in entgegengesetzter Richtung zum ersten Gewinde ausgeführt ist, wobei die zweite Grundplatte an der zweiten Mutter in Translation entlang der Achse des Gewindestabs (18) befestigt ist.

**Claims**

1. A drive device comprising:

   - a screw-and-nut system (17) comprising a threaded rod (18) and a first nut (20; 21) that is connected to the threaded rod (18) by means of a screw connection;
   - a gearset (30), allowing a rotational movement to be transmitted to the threaded rod (18), the gearset comprising a first toothed wheel (33) and a second toothed wheel (34) engaged with the first toothed wheel (33);

   **characterized in that** the drive device comprises:

   - a set of stops (31, 32) comprising a first stop (31) connected to the first wheel (33) rotating about an axis of rotation of the first wheel (33) and a second stop (32) connected to the second toothed wheel (34) rotating about an axis of rotation of the second wheel (34), the first stop (31) and the second stop (32) being configured and arranged to butt against one another so as to limit an angular travel of the threaded rod (18) at a first angular position in a first direction.

2. The drive device as claimed in the preceding claim, wherein the first stop (31) and the second stop (32) are configured and arranged to abutt against one another so as to limit the angular travel of the threaded rod (18) at a second angular position in a second direction, opposite the first direction.

3. The drive device as claimed in claim 1, wherein the set of stops comprises a third stop (35) connected to the first wheel (33) rotating about the axis of rotation of the first wheel (33) or connected to the second toothed wheel (34) rotating about the axis of rotation of the second wheel (34) and configured and arranged to abutt against the second stop (32), or respectively against the first stop (31), so as to limit the angular travel of the threaded rod (18) at a second angular position in a second direction, opposite the first direction.

4. The drive device as claimed in claim 1, wherein the set of stops comprises a first additional stop (36) connected to the second toothed wheel (34) rotating about the axis of rotation of the second wheel (34) and a second additional stop (37) connected to the first wheel (33) rotating about the axis of rotation of the first wheel (33), the first additional stop and the second additional stop being configured and arranged to butt against one another so as to limit an angular travel of the threaded rod (18) at a second angular position in the second direction, opposite the first direction.

5. The drive device as claimed in any one of the preceding claims, wherein the first toothed wheel (33) has a first number of teeth and the second toothed wheel has a second number of teeth, different from the first number of teeth.

6. The drive device as claimed in the preceding claim, wherein the first number of teeth and the second number of teeth together make a prime number.

7. The drive device as claimed in any one of the preceding claims, wherein at least one stop of the set of stops is able to occupy a plurality of predetermined set angular positions, with respect to the wheel to which it is rotationally connected, about the axis of rotation of the wheel.

8. The drive device as claimed in the preceding claim, wherein at least one stop is mounted removably on the first wheel or on the second wheel at one angular position taken from a plurality of angular positions.

9. The drive device as claimed in any one of the preceding claims, comprising a motor (50) that is coupled to the threaded rod (18) and drives the threaded rod (18) so that it rotates about the longitudinal axis.

10. The drive device as claimed in the preceding claim, wherein the threaded rod (18) is coupled to the motor (50) via a torque limiter (54).

11. The drive device as claimed in either of claims 9 to 10, wherein the threaded rod (18) is coupled to the motor (50) via a torque limiter (54) and a freewheel (55) which are configured to limit a turning torque of the threaded rod (18) along its longitudinal axis to one direction of rotation only.

12. The drive device as claimed in any one of claims 9 to 11, comprising a control member (61) and at least one sensor for detecting a first operational maximum angular position of the threaded rod (18) in the first direction preceding the first angular position in the first direction, the control member (61) receiving measurements from the first position sensor and being configured to control the motor (50) on the basis of the measurements from the sensor so as to stop the motor when the first limit angular position is reached.

13. The drive device as claimed in any one of the preceding claims, comprising a thumbwheel that is secured to a toothed wheel of the gearset (30) allowing an operator to turn said toothed wheel about an axis of rotation of said toothed wheel.

14. A strapping device for binding an object comprising a clamping strip comprising a first end (10) and a second end (11) and forming a loop that is intended to surround the object, the strapping device comprising a drive device as claimed in any one of the preceding claims, the drive device allowing the two ends to move with respect to one another so as to increase or decrease the size of the loop, the first end (10) of the strap (6) being secured to the first nut in translation along the axis of the threaded rod (18).

15. The strapping device as claimed in the preceding claim, wherein the first nut is engaged with a first screw thread of the threaded rod, the screw-and-nut system comprising a second nut engaged with a second screw thread of the threaded rod which is formed in the opposite direction to the first thread, the second end of the clamping strip being secured to the second nut in translation along the axis of the threaded rod (18).

16. A holding device for gripping a hollow object, said device comprising a first pad and a second pad which are capable supporting a hollow object, on the interior of the object, the holding device comprising a drive device as claimed in any one of claims 1 to 13, configured to move the two pads in relation to one another so as to move them away from one another in order to grip the object or to move them closer together in order to release the object, the first pad being secured to the first nut in translation along the axis of the threaded rod (18), the screw-and-nut system comprising a second nut engaged with a second screw thread which is formed in the opposite direction to the first thread, the second pad being secured to the second nut in translation along the axis of the threaded rod (18).

FIG.1

# FIG.2

FIG.3a

FIG.3b

FIG.3c

FIG.4a

FIG.4b

FIG.5a

FIG.5b

EP 3 562 741 B1

FIG.6

FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20101038983 A1